Europäisches Patentamt

European Patent Office

Office européen des brevets

(19)

(11) Publication number: **0 133 701**
**B1**

(12) **EUROPEAN PATENT SPECIFICATION**

(45) Date of publication of patent specification: **20.07.88**

(51) Int. Cl.⁴: **B 65 B 27/10**

(21) Application number: **84109428.7**

(22) Date of filing: **08.08.84**

(54) **Method of and apparatus for bundling elongate articles.**

(30) Priority: **11.08.83 JP 147245/83**
**25.02.84 JP 34694/84**

(43) Date of publication of application:
**06.03.85 Bulletin 85/10**

(45) Publication of the grant of the patent:
**20.07.88 Bulletin 88/29**

(84) Designated Contracting States:
**BE CH DE FR IT LI NL SE**

(56) References cited:
**EP-A-0 095 784**
**US-A-3 158 973**
**US-A-3 670 986**
**US-A-4 232 498**

(73) Proprietor: **YOSHIDA KOGYO K.K.**
**No. 1 Kanda Izumi-cho Chiyoda-ku**
**Tokyo (JP)**

(72) Inventor: **Watanabe, Kozo**
**4024, Mikkaichi**
**Kurobe-shi Toyama-ken (JP)**
Inventor: **Kawada, Masashi**
**9597, Yoshida Ikuji**
**Kurobe-shi Toyama-ken (JP)**
Inventor: **Okada, Yozo**
**830, Tochiya Unazuki-machi**
**Shimoniikawa-gun Toyama-ken (JP)**

(74) Representative: **Patentanwälte Leinweber &**
**Zimmermann**
**Rosental 7/II Aufg.**
**D-8000 München 2 (DE)**

Courier Press, Leamington Spa, England.

## Description

The present invention generally relates to an apparatus for bundling a number of elongate articles with a band according to the preamble of claim 1.

An apparatus of this type is disclosed in US—A—4 232 498. With this prior art apparatus the gripper mechanism has a movable gripper member. This movable gripper member has a cam cooperating with a release member mounted on the presser mechanism. If the presser mechanism approaches the gripper mechanism the movable gripper member is urged away from the corresponding stationary gripper member in order to release thereby the front end of the band surrounding the bundle. After cutting off the band the free end formed thereby is supplied to the slit between the gripper means. If the gripper mechanism then withdraws from the gripper mechanism this free end of the band is clamped between the two gripper means. This known apparatus is tainted with the disadvantage of having a relatively complex structure.

The object of the invention is to improve the apparatus according to the preamble of claim 1 to the effect that the gripper mechanism has a simpler structure.

This object is realized by the basic concept of the invention set forth in the characterizing portion of claim 1.

The advantage to be achieved by the invention essentially consists in a simpler structure since opening of the gripper mechanism and feeding the band into this mechanism is effected by one single member, namely the presser arm.

Further developments of the invention are set forth in the depending claims.

The invention will now be described in more detail with reference to three embodiments thereof illustrated in the accompanying drawings, in which:

Figure 1 is a perspective view of an apparatus for bundling slide fasteners according to an embodiment of the present invention;

Figures 2A through 2H are schematic views showing progressive steps of bundling operation of the apparatus illustrated in Figure 1;

Figures 3A and 3B are perspective views of slide fasteners bundled by the apparatus of Figure 1;

Figure 4 is a perspective view of an apparatus for bundling slide fasteners according to another embodiment of the present invention;

Figures 5A through 5H are schematic views showing progressive steps of bundling operation of the apparatus illustrated in Figure 4;

Figures 6A and 6B are perspective views of slide fasteners bundled by the apparatus of Figure 4;

Figure 7 is an enlarged side elevational view, partly broken away, showing the manner in which a piercing needle operates; and

Figure 8 is a fragmentary perspective view of a cutter according to still another embodiment.

Identical or like parts are denoted by identical or like reference characters throughout the views.

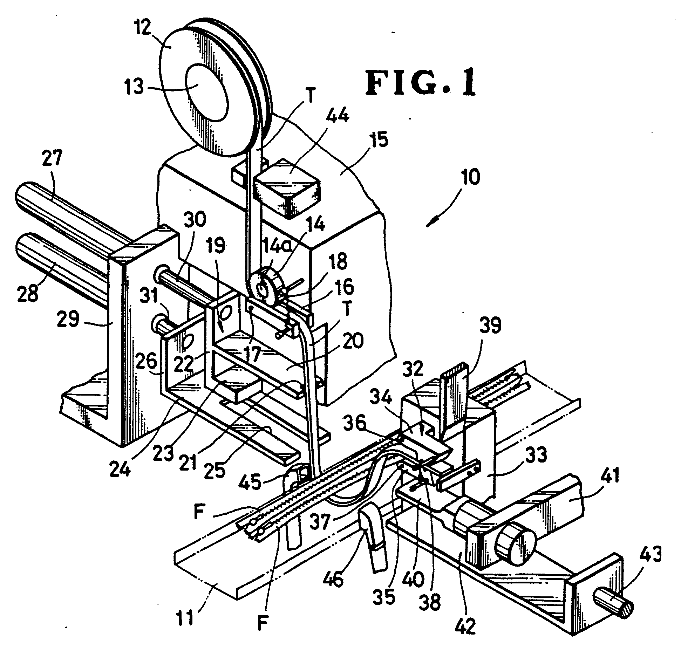

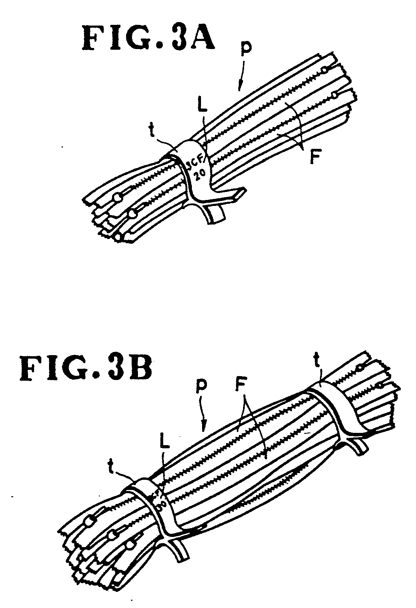

Figure 1 shows an apparatus for bundling a number of elongate pieces or articles F such as slide fasteners with a bundling band t (Figures 3A and 3B) of synthetic resin such as polyethylene or vinyl chloride, or laminated plastic of paper and synthetic resin, the apparatus being generally designated by the reference numeral 10.

The apparatus 10 has an elongate channel-shaped bundle tray 11 positioned substantially centrally in the apparatus 10 for receiving a bundle of elongate articles F. A reel 12 is rotatably mounted by a shaft 13 on a support (not shown) and positioned upwardly of the bundle tray 11 on one side thereof, the reel 12 supports a roll of continuous band web T from which successive bands are cut off. A feed roller 14 is rotatably mounted by a shaft 14a on a base 15 for feeding the continuous band web T by a predetermined length in each cycle of operation of the bundling apparatus 10, the shaft 14a being coupled to a reversible motor (not shown). The feed roller 14 is positioned substantially directly below the reel 12. A band web guide 16 is vertically angularly movably mounted by a pin 17 on the base 15 below the feed roller 14. The band web guide 16 has a guide groove defined in an upper surface thereof and receiving a lower portion of the feed roller 14 loosely fitted therein. The guide groove is slightly wider than the band web T for guiding the same therein. The band web guide 16 is normally biased by a spring 18 to move toward the feed roller 14 for coacting therewith in supplying the band web T by a controlled length each time.

A band web presser 19 is disposed below the feed roller 14 for laterally displacing the band web T as supplied from the feed roller 14. The band web pressure 19 comprises a horizontal presser arm 20 having a positioning recess 21 defined in a distal end thereof and extending from a vertical base 22 and an anvil 23 positioned below the presser arm 20 and extending from the base 22 parallel to the presser arm 20. There is a horizontal forked band web holder 24 disposed below and extending parallel to the presser arm 20 from a vertical base 26, the band web holder 24 having a rectangular slot 25 defined therein and extending from a distal end thereof toward the base 26 but terminating short thereof. A pair of horizontal pneumatic cylinders 27, 28 is supported on a cylinder support 29 and has a pair of respective piston rods 30, 31 connected respectively to the vertical bases 22, 26 for retractably moving the presser arm 20, the anvil 23, and the band web holder 24 toward a position over the bundle tray 11.

A band web gripper 32 is positioned upwardly of the bundle tray 11 on an opposite side thereof in confronting relation to the presser arm 20. The band web gripper 32 includes a base 33 and a pair of gripping jaws 34, 35 pivotably mounted on the base 32 by pins 36, 37, respectively. The gripping jaws 34, 35 are normally biased toward each other by a spring 38 connected between the gripping jaws 34, 35 for gripping a free end of the band web T and a portion thereof that has been drawn by the band web presser arm 20, as will be described later. A vertical cutter 39 is vertically movably disposed above a rear end of the band web gripper 32 remote from the pins 36, 37 for cutting off a portion $T_1$ (Figure 2E) of the band web T which projects from the rear end of the band web gripper 32.

An ultrasonic horn 40 is positioned below the band web gripper 32 in confronting relation to the anvil 23 for fusing the band web T applied thereagainst by the anvil 23 which have moved toward the ultrasonic horn 40. The ultrasonic horn 40 is supported at a rear end thereof by a support arm 41. A horizontal bundle pusher 42 is horizontally movably supported at a rear end thereof on a piston rod 43 of an air cylinder (not shown). The horizontal bundle pusher 42 is retractably movable toward a position over the bundle tray 11.

A printer 44 is positioned between the reel 12 and the feed roller 14 for marking various pieces of information such as a slide fastener type and a lot number on the bundle web T at spaced intervals therealong.

A pair of hot air nozzles 45, 46 is disposed one on each side of the bundle tray 11 in mutually confronting relation for emitting hot air toward a finished bundle on the bundle tray 11. Where the bundle web T is made of a thermally shrinkable material, a bundle band will shrink around slide fasteners F upon application of hot air for stably and tightly bundling the slide fasteners F.

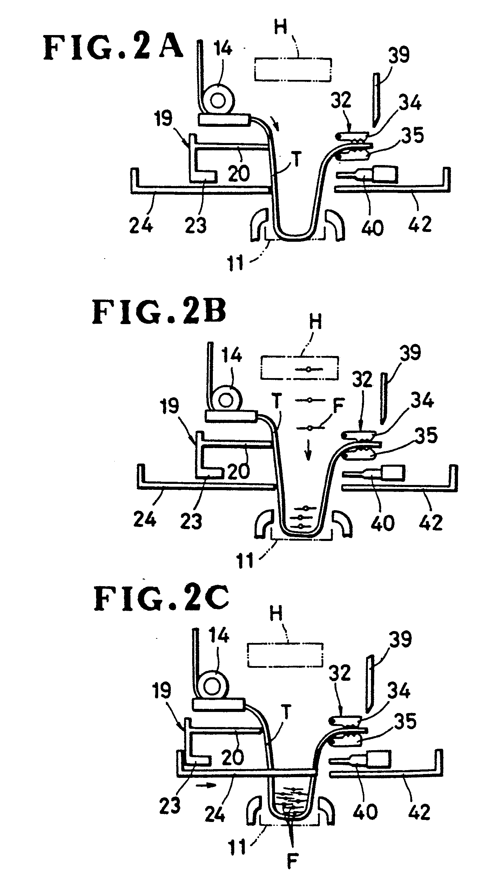

Operation of the apparatus 10 of the foregoing construction will be described with reference to Figures 2A through 2H.

As shown in Figure 2A, a predetermined length of the band web T is unreeled by the feed roller 14 onto the bundle tray 11 substantially in the shape of a U with its free end gripped by the band web gripper 32. The presser arm 20, the anvil 23, the band web holder 24, and the bundle pusher 42 are in their retracted position as shown.

Finished slide fasteners F are discharged by gravity from a fastener discharger H coupled to a slide fastener finishing machine (not shown) and positioned over the bundle tray 11 so that the slide fasteners F are placed on the band web T on the bundle tray 11, as illustrated in Figure 2B.

The band web holder 24 is moved forward with the band web T received in the slot 25 (Figure 1) to the position over the bundle tray 11, in which the band web holder 24 holds down the slide fasteners F extending across the band web T, as shown in Figure 2C.

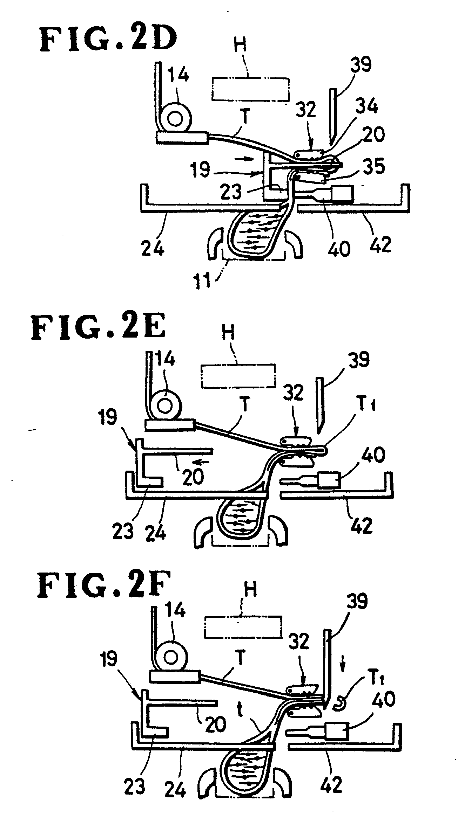

Then, the presser arm 20 and the anvil 23 are moved forward. The presser arm 20 presses the band web T as folded forcibly between the gripping jaws 34, 35. At this time, the band web T is prevented by the band web holder 24 from being excessively pulled upwardly. The anvil 23 also presses portions of the band web T as it surrounds the slide fasteners F against the tip end of the ultrasonic horn 40. The ultrasonic horn 40 is now energized to fuse the band web T against the anvil 23 (Figure 2D).

After the band web T has been ultrasonically fused, the presser arm 20 and the anvil 23 are retracted to their original position. The free end and folded portion of the band web T are left gripped between the gripping jaws 34, 35, with a length of the band web T between the free end and folded portion extending around the slide fasteners F, as shown in Figure 2E.

The cutter 39 is then lowered to cut off a portion T1 of the band web T which projects from the rear end of the band web gripper 32, whereupon the length of the band web T disposed around the slide fasteners F is cut off from the band web T into a bundling band t as shown in Figure 2F.

The band web holder 24 is retracted and at the same time the bundle pusher 42 is moved forward to push the bundling band t so that its end will be pulled off the band web gripper 32. At this time, an end of the band web T as supplied from the feed roller 14 remains gripped by the band web gripper 32. In case the band web T is made of a thermally shrinkable material, hot air is discharged from the hot air nozzles 45, 46 against the bundling band t to cause the latter to shrink tightly around the slide fasteners F, thereby producing a bundled article p, as illustrated in Figure 2G.

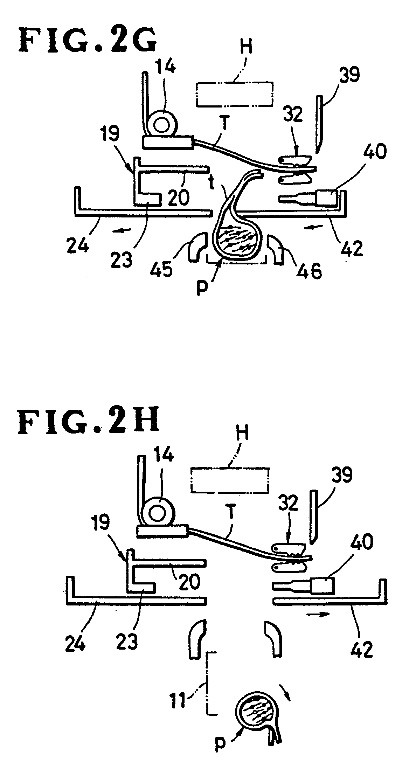

Finally the bundle tray 11 is tilted about one of its longitudinal edges to discharge the bundled article p as shown in Figure 2H.

One cycle of bundling operation is now completed. The above cycle is then repeated to produce successive bundles of slide fasteners F. The printer 44 is actuated to mark the band web T with necessary information in each bundling cycle.

Figure 3A shows a bundled article p thus produced from the apparatus 10. The bundled slide fasteners F are bundled by the band t bearing a printed piece of information L indicating a lot number. Figure 3B illustrates another bundled article p in which the slide fasteners F are bundled by two bands t which can be supplied by two of the apparatus 10 which are disposed side by side.

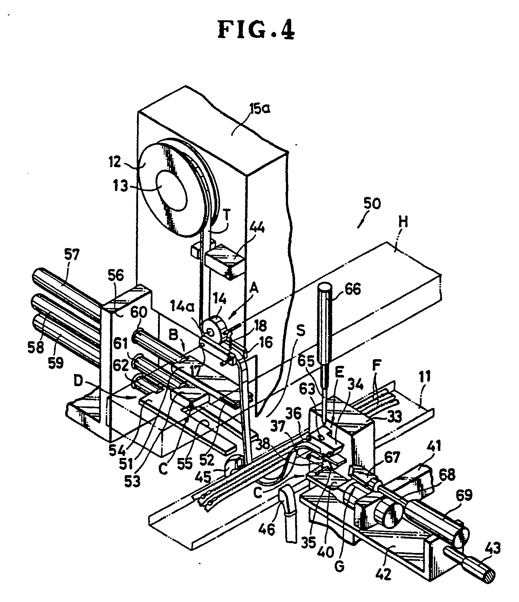

Figure 4 illustrates a bundling apparatus 50 according to another embodiment of the present invention. The apparatus 50 is basically the same as the apparatus 10 shown in Figure 1, and only those components which differ from those of the apparatus 10 will be described below.

The bundle tray 11 and the slide fastener discharger H are vertically spaced from each other with a bundling station S defined therebetween.

The reel 12 for supplying the band web T and the printer 44 are mounted on a base 15a. The feed roller 14 and the band web guide 16 jointly constitute a band web feed mechanism A.

A band web presser mechanism B disposed below the feed roller 14 comprises a horizontal presser arm 51 having a horizontal slit 52 defined in a distal end thereof. An anvil 53 is positioned below the presser arm 51. The anvil 53 and the ultrasonic horn 40 jointly constitute a band fusing mechanism C. A band web holder mechanism D comprises a horizontal forked band web holder 54 located downwardly of the anvil 53 and has a slot 55. The apparatus 50 further includes a support 56 supporting thereon three parallel air cylinders 57, 58, 59 which have respective piston rods 60, 61, 62 connected respectively to the presser arm 51, the anvil 53, and the band web holder 54.

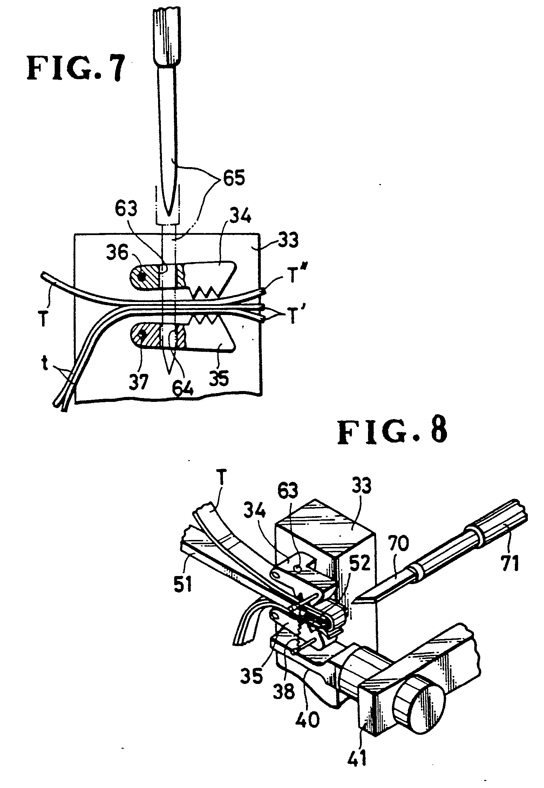

A band web gripper E is composed of the gripping jaws 34, 35 having apertures 63, 64 (Figure 7) defined vertically therethrough. A piercing needle 65 is located above the band web gripper E in vertical alignment with the apertures 63, 64. The piercing needle 65 is vertically movable by an air cylinder 66.

A cutter mechanism G is located behind the band web gripper E and comprises a horizontal cutter 67 mountd on a piston rod 68 of an air cylinder 69. The cutter 67 is retractably movable toward the band web gripper E and into the slit 52 in the presser arm 51 as it is positioned between the gripping jaws 34, 35, as will be described later.

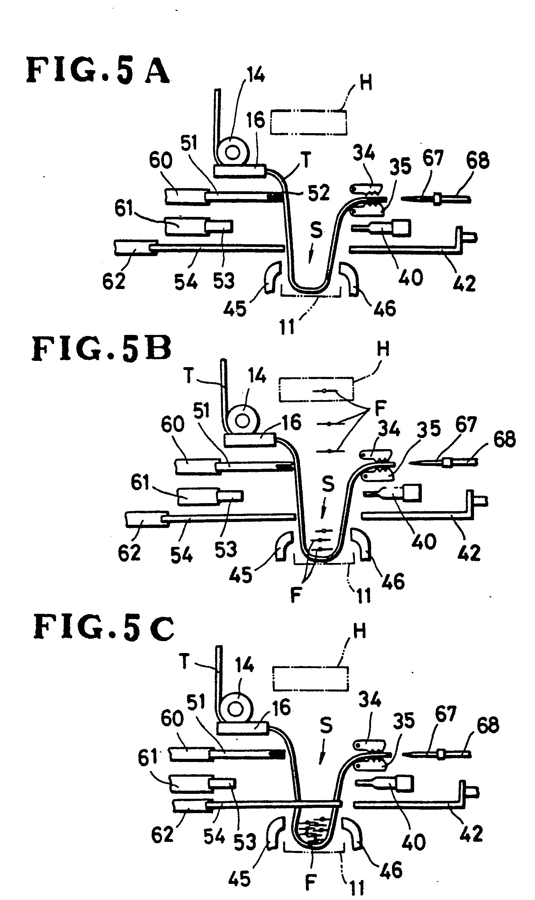

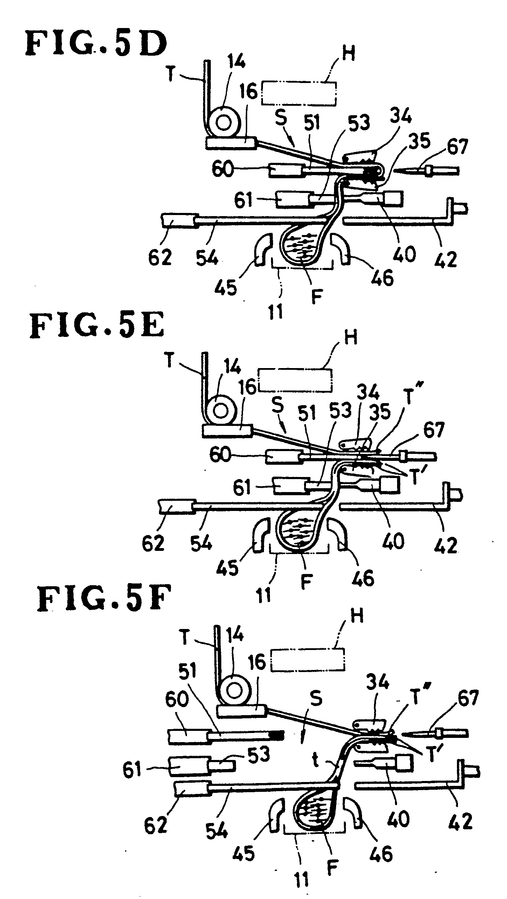

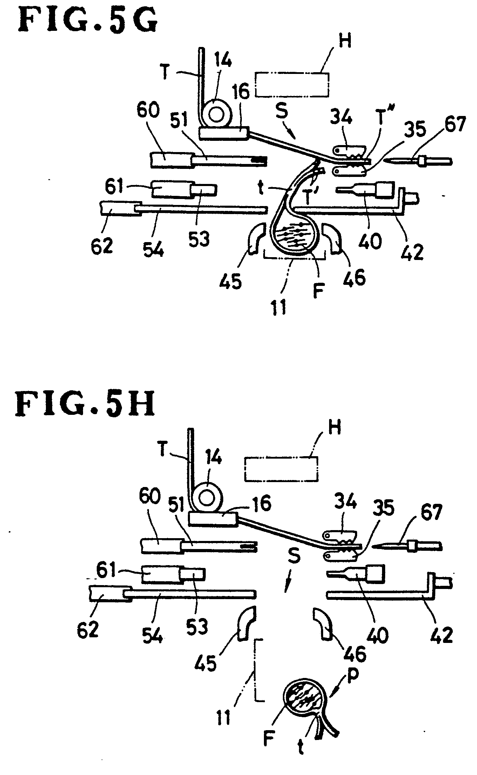

Figures 5A through 5H illustrate progressive steps of bundling operation of the apparatus 50. The steps shown in Figures 5A through 5H are substantially the same as those illustrated in Figures 2A through 2H. Only those operation modes which are different from the operation of Figures 2A through 2H will be described. After the band web T is pressed by the presser arm 51 into a position between the gripping jaws 34, 35 as shown in Figure 5D, the horizontal cutter 67 is moved into the slit 52 in the presser arm 51, cutting into the folded portion of the band web T, as illustrated in Figure 5E. The horizontal cutter 67 is more advantageous than the vertical cutter 39 (Figure 1) in that there is no waste band web portion cut off. As shown in Figures 5E, 5F, and 7, the gripper E now grips an end T'' of the band web T as supplied from the feed roller 14 and ends T' of a bundling hand t.

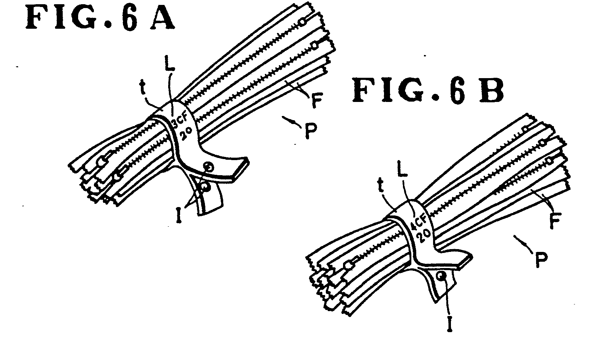

The piercing needle 65 is actuated by the air cylinder 66 at the time one sequence of bundling cycles is completed, or upon a shortage of slide fasteners F to be bundled together at the time a different number of slide fasteners are to be tied by one band or a different type of slide fasteners is to be bundled. More specifically, when there is a shortage of slide fasteners F to be bundled together by one band, the piercing needle 65 is lowered all the way through the apertures 63, 64 in the gripping jaws 34, 35 to form holes l (Figure 6A) in the ends T' of the band t, thus indicating such a slide fastener shortage. After the piercing needle 65 has been lifted and the bundled article p has been discharged, the pierced end T'' of the band web T remains gripped between the gripping jaws 34, 35. Since the piercing needle 65 is not actuated if there is a sufficient number of slide fasteners supplied, a next bundled article p has a band t having only one hole l in one of the ends thereof, as shown in Figure 6B. Therefore, the band t with one pierced hole only can be distinguished from the band which bundles an insufficient number of slide fasteners. The piercing needle 65 is preferably put into operation in the step shown in Figure 5F.

The band web feed mechanism A, the band web pressure mechanisms B, the fusing mechanism C, the band web holder mechanism D, and the cutter mechanism G are driven by different drive sources so that the mechanisms can be adjusted separately to achieve a desired operation sequence. Therefore, band webs and slide fasteners of different types and dimensions can be used on the apparatus 50.

Figure 8 shows a cutter mechanism according to still another embodiment of the invention. The cutter mechanism includes a cutter 70 drivable by an air cylinder 71 to move in a direction substantially perpendicular to the direction in which the presser arm 51 is retractably movable. The cutter 70 tranversely cuts off the folded band web portion projecting from the gripping jaws 34, 35. The cutter mechanism of Figure 8 also does not produce any waste band web.

## Claims

1. An apparatus for bundling a number of elongate articles with a band, comprising:
   (a) a bundle tray (11);
   (b) a reel (12) of a band web (T);
   (c) a feed mechanism (A) for supplying a length of the band web (T) from said reel (12) onto said bundle tray (11);
   (d) a discharger (H) for discharging a number of elongate articles (F) onto said length on said bundle tray (11);
   (e) a gripper mechanism (32; E) disposed on one side of said bundle tray (11) for gripping a free end of said length;
   (f) a presser mechanism (19; B) disposed on an opposite side of said bundle tray (11) for pressing an opposite end of said length so as to be gripped by said gripper mechanism (32; E) with said length surrounding said elongate articles (F);
   (g) a fusing mechanism (C) for fusing end portions of said length to each other; and
   (h) a cutter mechanism (G) for cutting said length off said band web (T) at said opposite end of said length as it is gripped by said gripper mechanism (32; E), thereby producing a band (t) bundling said elongate articles (F), characterized in that said apparatus comprises a holder mechanism (D) including a holder (24) having a slot (25) for receiving said length of the band web (T) therein and movable over said elongate articles (F) on said bundle tray (11) for holding said elongate articles (F) when said opposite end of said length is gripped by said gripper mechanism (E), said gripper mechanism (32; E) comprises a pair of gripping jaws (34; 35) for gripping said free end of the band web (T) therebetween; and that said presser mechanism (19; B) comprises a presser arm (20; 51); said gripping jaws (34; 35) and said presser arm (20; 51) being relatively movable toward each other to enable said presser arm (20; 51) to be received between said gripping jaws (34; 35), thereby inserting said opposite end of said length of said band web (T) in folded condition between said pair of gripping jaws (34; 35); said cutter mechanism (G) being operable for cutting the folded opposite end of said length.

2. An apparatus according to claim 1, wherein said presser arm (20; 51) is retractably movable between said gripping jaws (34; 35).

3. An apparatus according to claim 1 or 2, said presser arm (51) having a slit (52) defined in a distal end thereof, said cutter mechanism including a cutter (67) reciprocably movable into said slit (52) when said presser arm (51) being received between said gripping jaws (34; 35) and the opposite end of said length of said band web (T) extends in folded condition around said pressure arm.

4. An apparatus according to claim 1 or 2, wherein said cutter mechanism comprises a vertical cutter (39) for transversely cutting off said opposite end of said length as it projects in folded condition from said gripper mechanism (32).

5. An apparatus according to claim 1 or 2, wherein said cutter mechanism (G) comprises a horizontal cutter (67) for longitudinally cutting off said opposite end of said length as it projects in folded condition from said gripper mechanism (32; E).

6. An apparatus according to one of the preceding claims further including a pusher (42) for pushing said band (t) off said gripper mechanism (32; E).

**Patentansprüche**

1. Vorrichtung zum Umschnüren länglicher Gegenstände mit einem Band, bestehend aus:
   (a) einer Bündelschale (11);
   (b) einer Spule (12) eines Bandes (T);
   (c) einem Zuführmechanismus (A) zum Zuführen eines Längenabschnittes des Bandes (T) von der Spule (12) auf die Bündelschale (11);
   (d) einem Abwerfer (H) zum Abwerfen einer Anzahl der länglichen Gegenstände (F) auf den Längenabschnitt auf der Bündelschale (11);
   (e) einem Greifermechanismus (32; E), der auf einer Seite der Bündelschale (11) angeordnet ist, um ein freies Ende des Längenabschnitts zu erfassen;
   (f) einem Andrückmechanismus (19; B), der auf der gegenüberliegenden Seite der Bündelschale (11) angeordnet ist, zum Andrücken eines gegenüberliegenden Endes des Längenabschnittes, damit dieser von dem Greifermechanismus (32; E) mit dem die länglichen Gegenstände (F) umgebenden Längenabschnitt erfaßt wird;
   (g) einem Schweißmechanismus (C) zum Verschweißen der Endbereiche dieses Längenabschnitts; und
   (h) einem Schneidmechanismus (G) zum Durchtrennen dieses Längenabschnittes des Bandes (T) an dem gegenüberliegenden Ende dieses Längenabschnittes, wenn es von dem Greifermechanismus (32; E) erfaßt wird, um dadurch ein die länglichen Gegenstände (F) umschnürendes Band (t) zu erzeugen, dadurch gekennzeichnet, daß die Vorrichtung einen Haltemechanismus (D) mit einem Halter (24) umfaßt, der einen Schlitz (25) zur Aufnahme des besagten Abschnittes des Bandes (T) aufweist und der über den länglichen Gegenständen (F) auf der Bündelschale (11) bewegbar ist, um die länglichen Gegenstände (F) zu halten, wenn das besagte gegenüberliegende Ende des Längenabschnittes von dem Greifermechanismus (E) erfaßt wird, wobei der Greifermechanismus (32; E) zwei Klemmbacken (34; 35) aufweist, um das besagte freie Ende des Bandes dazwischen zu erfassen; und daß der Andrückmechanismus (19; B) einen Andrückarm (20; 51) aufweist, wobei die Klemmbacken (34; 35) und der Andrückarm (20; 51) relativ zueinander bewegbar sind, damit der Andrückarm (20; 51) zwischen die Klemmbacken (34; 35) einführbar ist, um das gegenüberliegende Ende dieses Längenabschnitts des Bandes (T) in gefaltetem Zustand zwischen den beiden Klemmbacken (34; 35) anzuordnen; wobei der Schneidmechanismus (G) betätigbar ist, um das gefaltete gegenüberliegende Ende dieses Längenabschnittes abzuschneiden.

2. Vorrichtung nach Anspruch 1, wobei der Andrückarm (20; 51) zwischen den Klemmbacken (34; 35) zurückziehbar beweglich ist.

3. Vorrichtung nach Anspruch 1 oder 2, wobei der Andrückarm (51) an seinem abliegenden Ende einen Schlitz (52) hat, wobei der Schneidmechanismus ein Messer (67) aufweist, das in den Schlitz (52) hinein und aus diesem heraus bewegbar ist, wenn der Andrückarm (51) zwischen die Klemmbacken (34; 35) eingeführt ist und sich das gegenüberliegende Ende dieses Längenabschnitts des Bandes (T) in gefaltetem Zustand um den Andrückarm herum erstreckt.

4. Vorrichtung nach Anspruch 1 oder 2, wobei der Schneidmechanismus ein vertikales Messer (39) aufweist, um das gegenüberliegende Ende des besagten Längenabschnitts quer zu durchschneiden, wenn es in gefaltetem Zustand aus dem Greifermechanismus (32) herausragt.

5. Vorrichtung nach Anspruch 1 oder 2, wobei der Schneidmechanismus (G) ein horizontales Messer (67) aufweist, um das gegenüberliegende Ende des besagten Längenabschnitts in Längsrichtung zu durchschneiden, wenn es in gefaltetem Zustand aus dem Greifermechanismus (32; E) herausragt.

6. Vorrichtung nach einem der vorhergehenden Ansprüche mit einem Schieber (42) zum Herausschieben des Bandes (t) aus dem Greifermeies Bandes (t) aus dem Greifermechanismus (32; E).

**Revendications**

1. Appareil destiné à botteler au moyen d'un ruban un certain nombre d'articles de formes allongée, comprenant:
   (a) un plateau (11) pour bottes;
   (b) une bobine (12) de ruban (T);

(c) un mécanisme d'alimentation (A) destiné à délivrer une longueur de ruban (T) à partir dudit tambour (12) dans ledit récipient (11) pour botte;

(d) un organe de décharge (H) destiné à décharger un certain nombre d'articles de forme allongée sur ladite longueur située dans ledit plateau (11) pour botte;

(e) un mécanisme de saisie (32; E) disposé sur l'un des côtés dudit plateau (11) pour botte destiné à saisir une extrémité libre de ladite longueur;

(f) un mécanisme de compression (19; B) disposé sur un côté opposé dudit plateau (11) pour botte en vue de comprimer l'extrémité opposée de ladite longueur de façon à ce qu'elle soit saisie par ledit mécanisme de saisie (32; E), ladite longueur entourant lesdits articles de forme allongée (F);

(g) un mécanisme de fusion (C) destiné à faire adhérer par fusion les parties d'extrémité de ladite longueur l'une avec l'autre;

(h) et un mécanisme de coupe (G) destiné à séparer par coupe ladite longueur dudit ruban (T) à l'extrémité opposée de ladite longueur, alors qu'elle est saisie par ledit mécanisme de saisie (32; E), en créant de ce fait un ruban (t) bottelant lesdits articles de forme allongée (F), caractérisé en ce que ledit appareil comprend un mécanisme de soutien (D) comprenant un organe de soutien (24) comportant une fente (25) destinée à recevoir ladite longueur du rouleau de ruban (T) et susceptible de se déplacer au-dessus desdits articles de forme allongée (F) situés dans le récipient (11) pour botte de façon à soutenir lesdits articles de forme allongée (F) lorsque ladite extrémité opposée de ladite longueur est saisie par ledit mécanisme de saisie (E); que ledit mécanisme de saisie (32; E) comprend une paire de mâchoires de saisie (34, 35) destinés à saisir entre elles ladite extrémité libre du ruban (T); et que ledit mécanisme de compression (19; B) comprend un bars presseur (20; 51) lesdites mâchoires de saisie (34; 35) et ledit bras presseur (20; 51) étant susceptibles d'être déplacés l'un vers l'autre en vue de permettre audit bras presseur (20; 51) de se loger entre lesdites mâchoires de saisie (34; 35), en insérant de ce fait ladite extrémité opposée de ladite longueur dudit ruban (T) pliée dans ladite paire de mâchoires de saisie (34; 35); ledit mécanisme de coupe (G) pouvant être actionné en vue de couper l'extrémité opposée pliée de ladite longueur.

2. Appareil selon la revendication 1 dans lequel ledit bras presseur (20; 51) peut être rappelé entre lesdites mâchoires de saisie (34; 35).

3. Appareil selon la revendication 1 ou 2, ledit bras presseur (51) comportant une fente (52) définie à son extrémité libre, ledit mécanisme de coupe incluant un organe de coupe (67) pouvant aller et venir dans ladite fente (52) lorsque ledit bras presseur (51) est logé entre lesdites mâchoires de saisie (34; 35) et l'extrémité opposée de ladite longueur dudit ruban (T) s'étendant à l'état plié autour dudit bras presseur.

4. Appareil selon la revendication 1 ou 2, dans lequel ledit mécanisme de couple comprend un organe de coupe (39) vertical destiné à séparer par couple transversale ladite extrémité opposée de ladite longueur lorsqu'elle est placée en avant à l'étant à l'état plié hors dudit mécanisme de saisie (32).

5. Appareil selon la revendication 1 ou 2, dans lequel ledit mécanisme de coupe (G) comprend un organe de coupe horizontal (67) destiné à la coupe longitudinale de séparation de ladite extrémité opposée de ladite longueur alors qu'elle fait saillie à l'état plié hors dudit mécanisme de saisie (32; E).

6. Appareil selon l'une des revendications précédentes comprenant, en outre, un poussoir (42) destiné à pousser ledit ruban (t) hors dudit mécanisme de saisie (32; E).

0 133 701

FIG. 1

# FIG.2A

# FIG.2B

# FIG.2C

# FIG.2D

# FIG.2E

# FIG.2F

FIG.2G

FIG.2H

4

# FIG. 3A

# FIG. 3B

# FIG.4

# FIG.5 A

# FIG.5 B

# FIG.5 C

FIG.5D

FIG.5E

FIG.5F

# FIG.5G

# FIG.5H

FIG. 6 A

FIG. 6 B

**FIG. 7**

**FIG. 8**